# EUROPEAN PATENT SPECIFICATION

(11) **EP 2 288 186 B1**
(45) Date of publication and mention of the grant of the patent: **17.04.2013**
(21) Application number: 09305759.4
(22) Date of filing: 17.08.2009
(51) Int. Cl.: H04W 4/02, H04L 29/08

(54) **A method and a system for transferring information between a client and a server, a client, a server, a computer program and a computer program product**
Verfahren und System zur Übertragung von Information zwischen einem Client und einem Server, ein Client, ein Server, ein Computerprogramm und ein Computerprogrammprodukt
Procédé et système pour le transfert d'informations entre un client et un serveur, client, serveur, programme informatique et produit de programme informatique

(43) Date of publication of application: 23.02.2011
(73) Proprietor: Alcatel Lucent, 75007 Paris (FR)
(72) Inventor: Strauss, Thomas, 73734, Esslingen (DE); Drewniok, Marc, 73728, Esslingen (DE)
(74) Representative: Wetzel, Emmanuelle

(56) References cited:
- WO-A-2008/019094
- GB-A- 2 383 216
- US-A1- 2002 118 118
- US-A1- 2003 060 211
- US-A1- 2008 305 795

## Description

### Background of the invention

The invention relates to a method for transferring information between a client and a server according to the preamble of claim 1, a system according to the preamble of claim 3, a client according to the preamble of claim 4, a server according to the preamble of claim 5, a computer program according to the preamble of claim 6 and a computer program product according to the preamble of claim 7.

An example for such method may be found in WO2008/019094A2. In WO2008/019094A2, information indicative of a geographic position of a client is sent to a server. Upon receipt of said geographic position of said client, said server sends information about said geographic location to said client.

US 2008/0305795 is further prior art relevant to the background of the present invention.

### Short description of the state of the art

An example for the implementation of a method for transferring information stored on a server for a location based service from said location based service server to a client is given in Hans-Peter Hutter, Thomas Mueggler, Udo Jung: Augmented Mobile Tagging, ACM International Conference Proceeding Series, Proceedings of the 10th international conference on Human computer interaction with mobile devices and services, Amsterdam, The Netherlands, 2008, ISBN: 978-1-59593-952-4, pages 319 - 322.

In this example information stored on said location based service server is linked to a tag labeled BeeTagg. Said BeeTagg is read by a mobile client and said information linked to said BeeTagg is displayed by said mobile client. To make certain information available to a user of said mobile client said BeeTagg is for example placed at a certain geographic location. Said information displayed by said mobile client for example contains touristic information about the location at which said BeeTagg is placed.

However in case said BeeTagg is misplaced or copied from the intended location to another location the information linked to said BeeTagg is still available for displaying by said mobile client.

Therefore the object of the invention is to make information available only if an identifier is valid at the geographic location at which a client sends said identifier to a server.

### Summary of the invention

This object is achieved by a method according to the teaching of claim 1, a system according to the teaching of claim 3, a server according to the teaching of claim 4, a computer program according to the teaching of claim 5 and a computer program product according to the teaching of claim 6.

The main idea of the invention is to transfer information between a server and a client, wherein transferring of a piece of information from said server to said client is permitted, depending on a first position, in particular of said client, and a predetermined second position, in particular said predetermined second position being assigned to said piece of information, and said piece of information is transferred when permitted, wherein said first position and a first identifier, being assigned to said predetermined second position, are transmitted in a first message.

Advantageously a distance between said first position and said second position is determined and the transmission of said piece of information is permitted if said distance is smaller than a predetermined threshold. This means that said piece of information is transferred from said server to said client if said client is within a certain distance from said second pre-determined position.

Further developments of the invention can be gathered from dependent claims and the following description.

### Brief description of the drawings

In the following the invention will be explained further making reference to the attached drawings.
Figure 1 schematically shows a system wherein the invention can be implemented.
Figure 2 schematically shows a first flowchart, showing some typical steps in a first method according to a first embodiment of the invention.
Figure 3 schematically shows a second flowchart, showing some typical steps in a second method according to said first embodiment of the invention.

### Detailed description of the invention

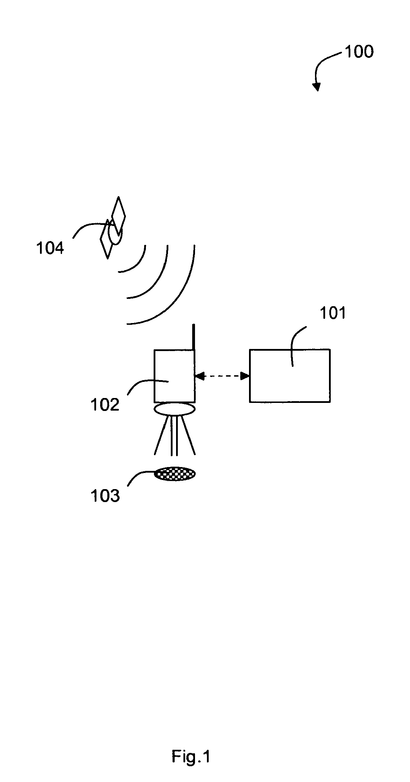

Figure 1 schematically shows a system 100 comprising a server 101, a client 102, a tag 103 and satellite 104.

Said server 101 and said client 102 are connected via a data link, for example a global system for mobile communication connection, well known as GSM connection, using general packet radio service, well known as GPRS.

Alternatively said data link between said server 101 and said client 102 may be a wireless local area network (WLAN) or any other data link. Such data links are well known to persons skilled in the art and are not described further here.

Said tag 103 contains a unique identifier, for example coded as an alphanumeric code and printed on said tag 103.

Alternatively said tag 103 may be a two-dimensional barcode like a BeeTagg or a similar code.

Alternatively said tag 103 may be a radio frequency identification (RFID) tag.

Said client 102 is adapted to read said tag 103 and determine said first identifier. To that end said client 102 is for example equipped with a camera to take a picture of said tag 103.

Alternatively said client 102 is equipped with a radio frequency identification (RFID) reader.

Said client 102 is furthermore equipped with means, for example software, to determine said first identifier from said tag 103.

Said client 102 is adapted to determine a first position, in particular of said client 102.

To that end said client 102 is for example equipped with a receiver for global positioning system (GPS) signals.

Figure 1 shows one satellite 104 of several satellites sending said global positioning system (GPS) signals. The technique for determining said first position from said global positioning system (GPS) signals is well-known to persons skilled in the art and not further described here.

Alternatively to using said global positioning system (GPS) signals said first position may be determined via for example proximity sensing as available in a global system for mobile communication (GSM) or using wireless local area network (WLAN) triangulation. Such methods are well known to a person skilled in the art and not further described here.

Said client 102 is adapted to determine a first message containing said first identifier and said information about said first position. Said information about said first position comprises for example the global positioning system (GPS) coordinates of said first position.

Said client 102 is adapted to send said first message to said server 101. To that end said client 102 reads a first address of said server 101 for example from a none-volatile storage that is built into said client 102.

Alternatively said client 102 is adapted to broadcast said first message for example using said general packet radio service (GRPS).

Said first address for example is an internet protocol address, well known as IP address, of said server 101. Alternatively any other type of addressing may be used particularly in case a data link other than a global system for mobile communication (GSM) is used.

Said server 101 is adapted to provide said piece of information to said client 102. To that end said server 101 for example comprises a data base in which said first information and said first identifier are stored. Additionally said data base is configured to assign to said first identifier to said piece of information.

Furthermore a predetermined second position is stored for example in said data base on said server 101. Said predetermine second position is also assigned to said piece of information for example using said data base.

Additionally said server 101 is adapted to receive said first message from said client.

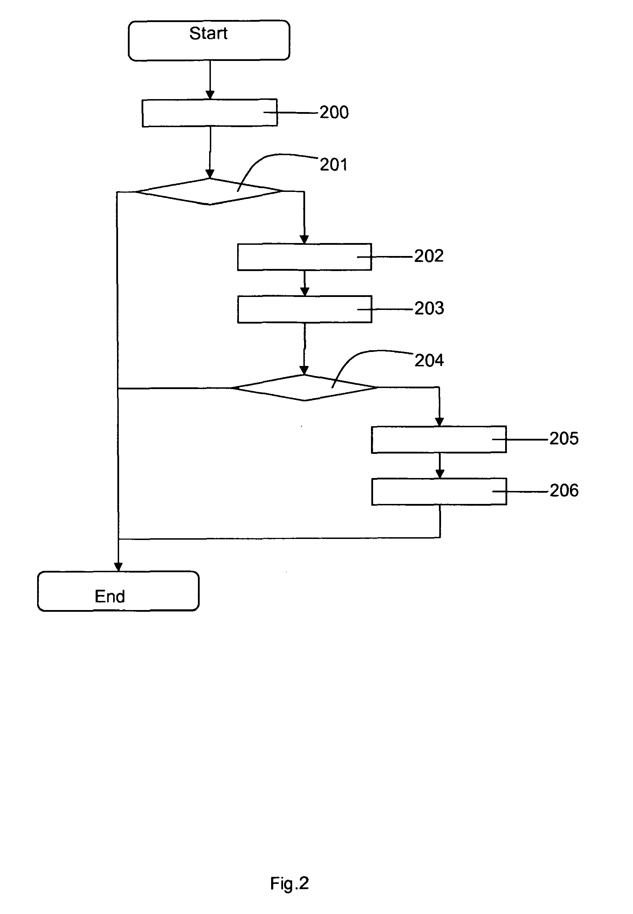

A method for transferring said piece of information from said server to said client is described, making reference to figure 2.

Said method according to figure 2 starts whenever said server 101 receives said first message containing said first identifier and said information about said first position. To that end said server 101 monitors each message received to determine whether said first identifier and said first information about said first position are included. To that end said first message for example includes a first flag indicating that said first message contains said first identifier and said first information about said first position. Afterwards a step 200 is executed.

In said step 200 said first identifier and said first information about said first position are extracted from said first message. Afterwards a step 201 is executed.

In said step 201 a test is performed to determine whether said data base contains an entry assigned to said first identifier. In case said data base contains an entry assigned to said first identifier a step 202 is executed. Otherwise the method ends.

In said step 202 said server 101 looks up said predetermined second position assigned to said first identifier in said data base. Afterwards a step 203 is executed.

In said step 203 said server 101 determines, how close said first position is to said predetermined second position. For example said server 101 determines a distance between said first position and said second position depending on said information about said first position and said predetermined second position.

For examples said predetermined second position is given by its global positioning system (GPS) coordinates. In this case said distance is calculated simply by subtracting the global positioning (GPS) coordinates of said first position and said second position. Afterwards a step 204 is executed.

In said step 204 a test is preformed to determine whether said first position is close enough to said predetermined second position. For example a test is performed, to determine whether said distance is smaller than a first predetermined threshold. Said first predetermined threshold is for example stored in a storage on said server 101 and for example set to 100 meter. If said distance is smaller than said first predetermined threshold a step 205 is executed. Otherwise the method ends.

In said step 205 said server 101 looks up said first piece of information assigned to said first identifier in said data base. Afterwards a step 206 is executed.

In said step 206 said server 101 sends said piece of information to said client. To that end said server 101 sends said first piece of information to a second address of said client is for example determined as an internet protocol address (well known as IP address) of said client 102 from said first message. Afterwards the method ends.

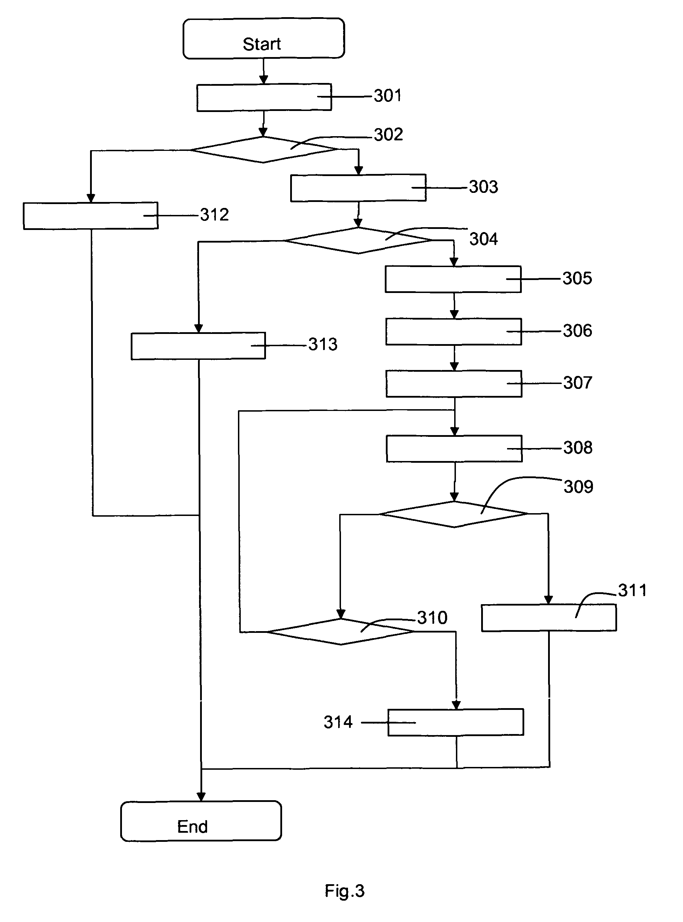

Figure 3 schematically choose some steps in a second method according to said first embodiment. Said second method is for example executed on said client 102 whenever a user of said client 102 presses a button on said client 102. After the start a step 301 is executed.

In said step 301 said client 102 reads said tag 103. For example by pressing said button on said client 102 said camera is activated to take a picture of said sticker. Afterwards a step 302 is executed.

In said step 302 a test is performed to determine whether a tag 103 was read. For example picture recognition software on said client 102 determines whether said picture is a tag 103. In case a valid picture was taken a step 303 is executed. Otherwise a step 312 is executed.

In said step 312 said client 102 displays a first error message for example no valid picture taken. Said first error message is for example displayed on a graphical user interface, that is built into said client 102. Said graphical user interface is for example a liquid crystal display. Methods to display information, like said first error message, on graphical user interfaces, like said liquid crystal display, are well known a person skilled in the art. Afterwards the method ends.

In said step 303 said client 102 determines said first identifier from said tag 103. For example picture recognition software running on said client 102 identifies for example said BeeTagg and determines said first identifier by decoding said BeeTagg. Methods for decoding tags like said tag 103 depend on the type of tag used. Such methods are well known to persons skilled in the art and not further explained here. Afterwards a step 304 is executed.

In said step 304 a test is performed to determine whether said first position can be determined or not. For example a test is performed to determine whether enough of said the signals form said global positioning system (GPS) are available. In case said first position can be determined, a step 305 is executed. Otherwise a step 313 is executed.

In said step 313 a second error message is displayed for example on said graphical user interface. Said second error message for example indicates that no first position can be established. Afterwards the method ends.

In said step 305 said client determines said first position for example by evaluating said signals of said global positioning system (GPS). Afterwards a step 306 is executed.

In said step 306 said client determines said first message comprising said first position, said first identifier and optionally said first flag. For example said client 102 sends said first message to said server 101 using said internet protocol address (IP address) of said server 101. Methods for determining such messages are well known to a person skilled in the art and not further explained here.

Said first message is for example sent to said server 102 via said global system for mobile communications connection (GSM connection) using said general packet radio service (GPRS).

Said first message for example also includes said second address of said client 102. Said second address of said client 102 may be used for example for identification of said client 102 for example to be able to sent said piece of information back to said client 102. Afterwards a step 307 is executed.

In said step 307 a timer is initialized. For example a variable i is initialized by setting said variable i = 0. Afterwards a step 308 is executed.

In said step 308 said timer is increased. For example said variable i is increased by one. Afterwards a step 309 is executed.

In step 309 a test is performed to determine whether a piece of information was received and is available. For example an input buffer of said client 102 is checked to see if said piece of information was received from said server 101. In case said piece of information is available a step 311 is executed. Otherwise a step 310 is executed.

In said step 310 a test is performed to determine whether said timer exceeds a second predetermined threshold. For example predetermined threshold is a constant t2 that is set t2= 500. For example a test is performed to determine whether said variable i is greater than said second predetermined threshold for example said constant t2. In case said timer exceeds said second predetermined threshold, a maximum waiting time has passed and a step 314 is executed. Otherwise said step 308 is executed.

In said step 314 a third error message is displayed for example on said graphic user interface of said client 102. For example said third error message indicates that no information is available. Afterwards the method ends.

In said step 311 said piece of information is displayed for example on said graphical user interface of said client 102. Afterwards the method ends.

In a modification of the first embodiment said tag 103 contains two separate identifiers. In this case said first identifier is assigned to said piece of information in said data base.

Additionally a second identifier is assigned to said second predetermined position in said data base.

Furthermore said server 101 is adapted to look up said piece of information depending one said first identifier. Additionally said server 101 is adapted to look up said predetermined second position depending on said second identifier. All other steps of said first method are performed in the same way according to this alternative.

Alternatively or additionally to the methods according to the first embodiment or the modification of the first embodiment said first identifier or said second identifier may be assigned to several different predetermined second positions respectively.

This is particularly helpful when using said tag 103 for example as a discount coupon that shall be valid only at a participating retail store. In this case for example all predetermined second positions of all participating retail stores of a discount campaign are assigned to said first identifier or said second identifier.

Additionally said client 102 is integrated for example in the cashier system of any of said participating retail store. In case a possessor of said discount coupon wants to use said discount coupon at said participating retail store, said client 102 is used to read said discount coupon. For example said discount coupon is a radio frequency identification (RFID) tag that is read by a radio frequency identification (RFID) reader integrated into said client 102.

Afterwards said first message is created by said client 102 and sent to said server 101 as described above.

Said server 101 receives said first message and sends said piece of information to said client 102, if said first position matches said second predetermined position. In this case said piece of information for example represents a confirmation for said client 102 to accept said tag 103 as a valid discount coupon and to apply said discount to purchases of said possessor of said discount coupon.

Therefore said discount coupon will be valid only at said participating retail store.

Alternatively said first piece of information may be stored on said tag 103. In this case said first identifier is used on said server 101 only to look up said second predetermined position and sent said predetermined second position to said client 102. Additionally said client 102 is adapted to reveal said piece of information stored on said tag 103 only if said distance between said first position and said predetermined second position received from said server 101 is smaller than said first threshold.

This means that the steps for determining permission to transfer said piece of information from said server to said client are implemented on said client 102 instead. This means that displaying of said piece of information by said client 102 is permitted depending one said first position in particular of said client and said predetermined second position in particular said second position being assigned to said piece of information.

In any of the methods described above said data base and said tag 103 are for example created by a provider of said piece of information.

Alternatively to storing said predetermined second position on said server in said data base at time of entering said piece of information, said provider may also activate said piece of information by assigning said predetermined second position to said first identifier or said second identifier when placing said tag 103 at said first position. In this case the operator uses for example a modified client that is adapted to determine said first position and to write said first position to said data base as said predetermined second position. This is for example done during an initialization phase of said tag 103.

To that end said modified client for example comprises a second button that said provider of said piece of information presses after placing said tag at said first location.

Furthermore said modified client is adapted to determine and send a second message to said server 101. Said second message contains for example said first position, said first identifier, and a second flag. Said second flag for example indicates the request to write said first position as predetermined second position to said data base and assign it with said first identifier. Said second message is for example sent from said modified client to said server 101 via said data link.

Additionally said server 101 is adapted to receive said second message containing said predetermined second position together with said first identifier and to write said predetermined second position to said data base while assigning said second predetermined position to said first identifier. Said server 101 may be adapted to monitor each message that is received, to determine whether said message contains said second flag. In this case said server may be adapted to update said data base when said second message containing said second flag is received.

This way said tag 103 can be assigned to said predetermined second position in a very easy way.

Alternatively or additionally said provider of said piece of information may enter said piece of information using a user interface on said client 102.

For example said user of said client 102 enters said piece of information, for example touristic information about a sightseeing point, at the time said user is at said sightseeing point.

In this case said user may place said tag 103 at said sightseeing point. To that end said client 103 is modified to provide an input means for said user for example a keyboard on a touch screen.

Additionally said client 102 is adapted to sent said piece of information to said server 101 for example via said data link.

Alternatively said piece of information maybe stored on said tag 103. In this case said client 102 is adapted to write said piece of information to said tag 103. For example said client 102 is adapted to write on said radio frequency identification (RFID) tag. Additionally said server 101 is adapted to receive said piece of information and said first identifier from said client 102. Furthermore said server 101 is adapted to write said piece of information to said data base and assign said first identifier to said piece of information in said data base.

This way a user of said client 102 may easily write up, for example touristic information about the sightseeing point he or she is located at, place said tag 103 at said sightseeing point and make said piece of information, for example said touristic information, available publicly.

At the same time said piece of information is only available at said sightseeing point. This prevents for example arbitrary copies of said tag 103 to be distributed for example at locations that do not match said piece of information.

## Claims

1. A method for transferring information between a server (101) and a client (102), **characterized in that** a first position of said client (102) and a first identifier assigned to a predetermined second position are sent from said client (102) to said server in a first message (101), wherein transferring (206) of a piece of information from said server (101) to said client (102) is permitted (204) depending on said first position of said client (102) and said first identifier assigned to said predetermined second position, and said piece of information is transferred when permitted, wherein said first position is determined as the position at which said first identifier is determined.

2. The method according to claim 1, **characterized in that** a distance between said first position and said second position is determined, and transmission of said piece of information is permitted if said distance is smaller than a predetermined threshold.

3. A system for transferring information between a client(102) and a server (101), **characterized in that** said client (102) is adapted to send a first position of said client (102) and a first identifier assigned to predetermined second position to said server (101) in a first message, said server (101) is adapted to receive a first position of said client (102) and a first identifier assigned to a predetermined second position from said client in said first message (102), to permit (204) transfer (206) of a piece of information from said server (101) to said client (102) depending on said first position of said client (102) and said first identifier assigned to said predetermined second position, and wherein said piece of information is transferred when permitted, wherein said first position is determined as the position at which said first identifier is determined.

4. A server (101) for transferring information between a client (102) and said server (101), **characterized, in that** said server (101) is adapted to receive a first position of said client (102) and a first identifier assigned to a predetermined second position from said client (102) in a first message, to permit (204) transfer (206) of a piece of information from said server (101) to said client (102) depending on said first position of said client (102) and said first identifier assigned to said predetermined second position, and wherein said piece of information is transferred when permitted, wherein said first position is determined as the position at which said first identifier is determined.

5. A computer program for transferring information, adapted to transfer information between a server (101) and a client (102), **characterized in that** said computer program, when executed on a computer, causes the computer to send a first position of said client (102) and a first identifier assigned to a predetermined second position from said client (102) to said server (101) in a first message, to permit transferring (204) of a piece of information from said server (101) to said client (102) depending on a first position of said client (102) and a first identifier assigned to a predetermined second position, and wherein said piece of information is transferred (206) when permitted, wherein said first position is determined as the position at which said first identifier is determined.

6. A computer program product for transferring information, adapted to transfer information between a server (101) and a client (102), comprising a computer usable medium having a computer readable program, **characterized in that** said computer readable program, when executed on a computer, causes the computer to send a first position of said client (102) and a first identifier assigned to a predetermined second position from said client (102) to said server (101) in a first message, to permit transferring (204) of a piece of information from said server (101) to said client (102) depending on a first position of said client (102) and a first identifier assigned to a predetermined second position, and wherein said piece of information is transferred (206) when permitted, wherein said first position is determined as the position at which said first identifier is determined.

## Patentansprüche

1. Verfahren zum Übertragen von Informationen zwischen einem Server (101) und einem Client (102), **dadurch gekennzeichnet, dass** eine erste Position des besagten Clients (102) und eine einer vorbestimmten zweiten Position zugeordnete erste Kennung in einer ersten Nachricht von dem besagten Client (102) an den besagten ersten Server (101) gesendet werden, wobei das Übertragen (206) einer Information von dem besagten Server (101) an den besagten Client (102) in Abhängigkeit von der ersten Position des besagten Clients (102) und von der besagten der besagten vorbestimmten zweiten Position zugeordneten Kennung genehmigt (204) und die besagte Information bei Genehmigung übertragen wird, wobei die besagte erste Position als die Position, an welcher die besagte erste Kennung ermittelt wird, bestimmt wird.

2. Verfahren nach Anspruch 1, **dadurch gekennzeichnet, dass** eine Entfernung zwischen der besagten ersten Position und der besagten zweiten Position ermittelt und die Übertragung der besagten Information genehmigt wird, wenn die besagte Entfernung kleiner als ein vorbestimmter Grenzwert ist.

3. System zum Übertragen von Information zwischen einem Client (102) und einem Server (101), dadurch gekenntzeichnet, dass der besagte Client (102) dazu ausgelegt ist, eine erste Position des besagten Clients (102) und eine erste einer vorbestimmten zweiten Position zugeordneten Kennung in einer ersten Nachricht an den besagten Server (101) zu senden, dass der besagte Server (101) dazu ausgelegt ist, eine erste Position des besagten Clients (102) und eine erste einer vorbestimmten zweiten Position zugeordnete Kennung in der besagten ersten Nachricht von dem besagten zweiten Client (102) zu empfangen, um die Übertragung (206) einer Information von dem besagten Server (101) an den besagten Client (102) in Abhängigkeit von der besagten ersten Position des besagten Clients (102) und der besagten ersten der besagten vorbestimmten zweiten Position zugeordneten Kennung zu genehmigen (204), und wobei die besagte erste Information bei Genehmigung übertragen wird, wobei die besagte erste Position als die Position, in welcher die besagte erste Kennung ermittelt wird, bestimmt wird.

4. Server (101) zum Übertragen von Informationen zwischen einem Client (102) und dem besagten Server (101), **dadurch gekennzeichnet, dass** der besagte Server (101) dazu ausgelegt ist, eine erste Position des besagten Clients (102) und eine einer vorbestimmten zweiten Position zugeordnete erste Kennung in einer ersten Nachricht von dem besagten Client (102) zu empfangen, um die Übertragung (206) einer Information von dem besagten Server (101) an den besagten Client (102) in Ahängigkeit von der besagten ersten Position des besagten Clients (102) und einer der besagten vorbestimmten zweiten Position zugeordneten ersten Kennung zu genehmigen (204), und wobei die besagte Information bei Genehmigung übertragen wird, wobei die besagte erste Position als die Position, in welcher die besagte erste Kennung ermittelt wird, bestimmt wird.

5. Computerprogramm zum Übertragen von Informationen, dazu ausgelegt, Informationen zwischen einem Server (101) und einem Client (102) zu übertragen, **dadurch gekennzeichnet, dass** das besagte Computerprogramm bei dessen Ausführung auf einem Computer gewirkt, dass der Computer eine erste Position des besagten Clients (102) und eine einer vorbestimmten zweiten Position zugeordnete erste Kennung in einer ersten Nachricht von dem besagten Client (102) an den besagten Server (101) sendet, um das Übertragen einer Information von dem besagten Server (101) an den besagten Client (102) in Abhängigkeit von einer ersten Position des besagten Clients (102) und einer einer vorbestimmten zweiten Position zugeordneten ersten Kennung zu genehmigen (204), und wobei die besagte Information bei Genehmigung übertragen (206) wird, wobei die besagte erste Position als die Position, in welcher die besagte erste Kennung ermittelt wird, bestimmt wird.

6. Computerprogramm-Produkt zum Übertragen von Informationen, welches dazu ausgelegt ist, Formationen zwischen einem Server (101) und einem Client (102) zu übertragen und ein auf einem Computer verwendbares Medium mit einem computerlesbaren Programm umfasst, **dadurch gekennzeichnet, dass** das besagte computerlesbare Programm bei dessen Ausführung auf einem Computer bewirkt, dass der Computer eine erste Position des besagten Clients (102) und eine einer vorbestimmten zweiten Position zugeordnete erste Kennung in einer ersten Nachricht von dem besagten Client (102) an den besagten Server (101) sendet, um die Übertragung einer Information von dem besagten Server (101) an den besagten Client (102) in Abhängigkeit von einer ersten Position des besagten Clients (102) und einer einer vorbestimmten zweiten Position zugeordneten ersten Kennung zu genehmigen (204), und wobei die besagte Information bei Genehmigung übertragen (206) wird, wobei die besagte erste Position als die Position, in welcher die besagte erste Kennung ermittelt wird, bestimmt wird.

## Revendications

1. Procédé pour transférer des informatisons entre un serveur (101) et un client (102), **caractérisé en ce qu'**une première position dudit client (102) et un premier identifiant attribué à une deuxième position prédéterminée sont envoyés depuis ledit client (102) audit serveur (101) dans un premier message, le transfert (206) d'un élément d'information dudit serveur (101) audit client (102) étant autorisé (204) en fonction de ladite première position dudit client (102) et dudit premier identifiant attribué à ladite deuxième position prédéterminée, et ledit élément d'information étant transféré lorsque l'autorisation est accordée, ladite première position étant définie comme étant la position à laquelle est déterminé ledit premier identifiant.

2. Procédé selon la revendication 1, **caractérisé en ce qu'**une distance entre ladite première position et ladite deuxième position est déterminée, et la transmission dudit élément d'information est autorisée si ladite distance est inférieure à un seuil prédéterminé.

3. Système pour transférer des informations entre un client (102) et un serveur (101), **caractérisé en ce que** ledit client (102) est adapté pour envoyer une première position dudit client (102) et un premier identifiant attribué à une deuxième position prédéterminée audit serveur (101) dans un premier message, ledit serveur (101) est adapté pour recevoir une première position dudit client (102) et un premier identifiant attribué à une deuxième position prédéterminée dudit client (102) dans ledit premier message, pour autoriser (204) le transfert (206) d'un élément d'information dudit serveur (101) audit client (102) en fonction de ladite première position dudit client (102) et dudit premier identifiant attribué à ladite deuxième position prédéterminée, et ledit élément d'information étant transféré lorsque l'autorisation est accordée, ladite première position étant définie comme étant la position à laquelle est déterminé ledit premier identifiant.

4. Serveur (101) pour transférer des informations entre un client (102) et ledit serveur (101), **caractérisé en ce que** ledit serveur (101) est adapté pour recevoir une première position dudit client (102) et un premier identifiant attribué à une deuxième position prédéterminée depuis ledit client (102) dans un premier message, pour autoriser (204) le transfert (206) d'un élément d'information dudit serveur (101) audit client (102) en fonction de ladite première position dudit client (102) et dudit premier identifiant attribué à ladite deuxième position prédéterminée, et ledit élément d'information étant transféré lorsque l'autorisation est accordée, ladite première position étant définie comme étant la position à laquelle est déterminé ledit premier identifiant.

5. Programme informatique pour transférer des informations, adapté pour transférer des informations entre un serveur (101) et un client (102), **caractérisé en ce que** ledit programme informatique, lorsqu'il est exécuté sur un ordinateur, amène l'ordinateur à envoyer une première position dudit client (102) et un premier identifiant attribué à une deuxième position prédéterminée depuis ledit client (102) audit serveur (101) dans un premier message, à autoriser le transfert (204) d'un élément d'information dudit serveur (101) audit client (102) en fonction de ladite première position dudit client (102) et d'un premier identifiant attribué à une deuxième position prédéterminée, et ledit élément d'information étant transféré (206) lorsque l'autorisation est accordée, ladite première position étant définie comme étant la position à laquelle est déterminé ledit premier identifiant.

6. Produit de programme informatique pour transférer des informations, adapté pour transférer des informations entre un serveur (101) et un client (102), comprenant un support utilisable sur ordinateur sur lequel se trouve un programme lisible par un ordinateur, **caractérisé en ce que** ledit programme lisible par un ordinateur, lorsqu'il est exécuté sur un ordinateur, amène l'ordinateur à envoyer une première position dudit client (102) et un premier identifiant attribué à une deuxième position prédéterminée depuis ledit client (102) audit serveur (101) dans un premier message, à autoriser le transfert (204) d'un élément d'information dudit serveur (101) audit client (102) en fonction d'une première position dudit client (102) et d'un premier identifiant attribué à une deuxième position prédéterminée, et ledit élément d'information étant transféré (206) lorsque l'autorisation est accordée, ladite première position étant définie comme étant la position à laquelle est déterminé ledit premier identifiant.
